# EUROPEAN PATENT SPECIFICATION

(11) **EP 1 904 382 B1**
(45) Date of publication and mention of the grant of the patent: **06.03.2013**
(21) Application number: 06741652.9
(22) Date of filing: 15.06.2006
(51) Int. Cl.: B65D 71/00, B65D 19/44, B65D 19/42, B62B 3/00, B65D 71/02

(54) **ARRANGEMENT FOR TRANSPORTING BOTTLES, DRINKS CONTAINERS AND/OR MULTIPACKS**
ANORDNUNG ZUM TRANSPORT VON FLASCHEN, GETRÄNKEBEHÄLTERN UND/ODER SAMMELPACKUNGEN
ENSEMBLE POUR LE TRANSPORT DE BOUTEILLES, DE RECIPIENTS POUR BOISSONS ET/OU D'EMBALLAGES MULTIPLES

(30) Priority: 22.06.2005 DE 102005029304; 06.12.2005 DE 102005058342; 30.01.2006 DE 202006001482 U
(43) Date of publication of application: 02.04.2008
(73) Proprietor: Delbrouck GmbH, 58710 Menden (DE)
(72) Inventor: DELBROUCK, Klaus, 50825 Köln (DE); LUDWIG, Henrik, 58706 Menden (DE)
(74) Representative: Dörner, Kötter & Kollegen
(86) International application number: PCT/CH2006/000327
(87) International publication number: WO 2006/136043

(56) References cited:
- WO-A-00/58173
- NL-C2- 1 007 612
- US-A- 4 410 099
- US-A- 4 932 532

## Description

### TECHNICAL FIELD

The invention relates to an arrangement for transporting drinks containers, in particular bottles and/or a plurality of handling units combined to form multipacks comprising a plurality of drinks containers, in particular bottles, for example a four-pack or a six-pack, the drinks containers or bottles or handling units being held tightly together by means of a retaining element, for example by means of a shrink film or similar film packaging, to form a single handling unit of for example square or rectangular basic shape, the arrangement comprising a tray of essentially rectangular basic shape, and the tray having a top side and an underside.

### BACKGROUND OF THE INVENTION

DE 20 2004 007 452.4 discloses an arrangement of the generic type which is suitable, and intended, for storing and accommodating plastic bottles, in particular PET bottles for drinks. Such tray-like elements are produced as plastic mouldings. Each plastic moulding has standing regions for bottles on the top side, so that the bottle foot can be fitted into the corresponding standing regions. On the underside, the moulding has plug-in regions for the closure caps or the tapered ends of bottles. This set-up makes it possible to position individual bottles on such mouldings and to place a further moulding on the bottles which have been placed in position, this further moulding then engaging over, and positioning the bottle necks or the closure ends of the bottles by way of the corresponding recesses. It is thus possible for a plurality of corresponding arrangements provided with bottles to be stacked one upon the other to form a transporting unit. Such transporting units are preferably secured by strapping means or the like. The strapping means is removed at the destination, so that it is then also possible for the arrangements with the bottles located therein to be positioned, for example, in sales stands or the like.

Another example for an arragement is disclosed by NL1007612.

In addition to the prior art disclosing that individual bottles are placed on such arrangements at the filling plant, it is also known, and customary, for individual bottles to be combined to form so-called six-packs or four-packs, each pack comprising two parallel rows of bottles, and each row, depending on the application, comprising two bottles or three bottles. These combined four-packs or six-packs are held together by suitable means, for example a shrink film. Instead of the bottles equally cans, or generally drinks containers, are commonly combined in such multi-packs.

As a result of this design, it is not possible for the bottles, as is customary with individual bottles, to be placed on corresponding transporting arrangements at a certain spacing apart from one another; rather, in the case of the handling units combined to form a four-pack or six-pack, the bottles are pushed close together in each case, so that they butt against one another. The spacing between the foot surfaces and the tapered ends of the bottles combined to form a handling unit thus differs from that between individually inserted bottles, which are spaced apart from one another in each case.

### SUMMARY OF THE INVENTION

Taking this prior art as the departure point, one object of the invention is to provide an arrangement of the generic type which is suitable, and intended, for accommodating multipacks in the form of, for example, four-packs or six-packs, positions such multipacks and allows trays and such bottle-containing handling units to be stacked one upon the other and also allows the insertion of individual drinks containers or individual bottles, preferably with equal spacings between the bottles in each case. Generally drinks containers shall be understood to include bottles (glass, PET etc) but also cans, tetrapacks and the like. If in the following reference is made to bottles, this shall in general include the above definition of drinks containers.

In order to achieve this object, the invention proposes that the top side of the tray
● has first supporting contours which are adapted to the foot region of the multipacks and serve for accommodating the foot region of a plurality of multipacks arranged one beside the other,
● has second supporting contours which are adapted to the head region of individual drinks containers or individual bottles and serve for accommodating the head region of a plurality of individual drinks containers or individual bottles inserted one beside the other,
the underside of the tray
● has third supporting contours which are adapted to the normally film-covered head region of the multipacks and serve for supporting purposes on the head region of the multipacks,
●has fourth supporting contours which are adapted to the foot region of individual drinks containers or individual bottles and serve for accommodating the foot region of a plurality of individual drinks containers or individual bottles inserted one beside the other.

Therefore, for accommodating multipacks, a plurality of trays can be arranged one above the other and the multipacks are positioned between the trays, the foot region of the multipacks being placed on the top side of the trays and the underside of the following tray being stacked on the head region of the multipacks, or for accommodating individual drinks containers or individual bottles, the trays are placed in the position in which they are turned through 180°, with the underside oriented upwards and the top side oriented downwards, and individual drinks containers or individual bottles are positioned between the trays, the trays accommodating the foot region by way of the underside and being stacked on the head region of the individual drinks containers or individual bottles by way of the top side of the following tray, wherein a stack of trays and multipacks and/or of trays and individual drinks containers or individual bottles is formed in each case.

As a result of this design, each tray is suitable, on the one hand, for accommodating multipacks in the form of four-packs or six-packs held together, for example, by shrink wrap or else for accommodating individual bottles. For use with multipacks the tray is set down with the top side upwards and the multipacks are inserted into the corresponding supporting contours. A further, identical tray can then be placed, with the same orientation, on the head region of the multipacks. This allows a stacking sequence of trays and multipacks.

It should be noted that the term contours is to be interpreted in the sense that it is a three-dimensional surface structure which allows to interact with the three-dimensional outer form/shape of the drinks containers (bottles, cans, Tetra pack etc) in a way such that the bottom portion as well as the top portion of either a multipack or individual drinks containers (depending on the orientation of the tray) are at least slightly embedded or held in or on this surface structure such that the multipacks or the individual drinks containers are essentially fixed or retained in space at their location.

If the same tray is to be used for accommodating and for transporting individual drinks containers or individual bottles, the tray is turned, so that the top side then forms the underside and the underside forms the top side. The corresponding individual drinks containers or individual bottles can then be inserted into the now upwardly oriented underside by way of the foot region, so that they are retained securely at a spacing apart from one another. A following tray can be placed, with the same orientation, on the head region of the individual drinks containers or individual bottles. It is thus possible to form a corresponding stack with a succession of trays and individual drinks containers or individual bottles. The two functions of the tray can be used to particularly good effect if, for example, reusable bottles are to be sold in the form of shrink-wrapped six-packs or in multipack units and at a later point in time, once they have been sold and the bottles have been emptied, the individual bottles can be returned using the same tray, which is merely turned through 180°. The corresponding design of the top sides and undersides of the tray here ensures that both the multipack units are securely positioned and retained between corresponding trays and the individual bottles, which are inserted once the trays are turned, are positioned and oriented to good effect. Such trays can also be used for transporting filled individual bottles, these trays being suitable, on account of their dimensions, for accommodating corresponding individual bottles, and allowing them to be filled, at automatic filling stations because the spacings between the individual bottles, on account of the corresponding design of the tray, are exactly the same, in contrast to the situation in which the tray is used for accommodating multipacks, in the case of which the bottles combined to form a multipack butt closely against one another and are spaced apart differently from individual bottles. It should however be noted that the contours for accommodating individual drinks containers need not necessarily be such that the drinks containers are equally spaced in both horizontal directions, as some kind of groupings can be desirable for these applications as well.

In a manner which has been mentioned above, the stack formed from bottles and trays or from multipacks and trays is held together by a strapping means. Alternatively the multipacks are formed by shrink films, by boxes, e.g. carton boxes etc.

A preferred development is regarded as being one in which the first supporting contours are formed by an essentially all-round undulating supporting border on which the outer multipack contours formed by the bottles of the multipack are supported, and/or by supporting protrusions which project from the standing surface of the top side of the tray, this standing surface preferably being formed by crosspieces (or a grid or web), and engage in the narrowed regions between adjacent multipacks.

It is thus the case, with the tray in a first position, which is intended for accommodating multipacks, that the inserted multipacks are retained all the way around the outside by the first supporting contours, which are formed by the undulating supporting border, while additional supporting protrusions are provided inside the tray, these additional supporting protrusions engaging between the adjacent multipacks and in the narrowed regions between adjacent multipacks, the narrowed regions being formed by the shape of the closely adjacent bottles.

Furthermore, it is preferably provided that the second supporting contours are formed by annular contours or hollow-cylindrical contours which are formed in the standing surface of the top side of the tray and into which the head of the individual bottles is respectively inserted, it being the case that, with individual bottles with a neck ring at the tapered head end, the neck ring is preferably supported on the contours. For accommodating sealed and/or unsealed (i.e. bottles without crown cork on top) crown sealed bottles, the annular contours or hollow-cylindrical contours may comprise radially inwardly extending tongues (e.g. two or four such tongues) which are bent towards an axial direction such that they may either abut onto a crown cork of a sealed bottle or engage in a self-centering manner with the opening of unsealed bottles, wherein level differences and differently covered bottles can be compensated.

When the tray is used for accommodating individual drinks containers or individual bottles, the top side of the tray forms the underside, which can be placed on the ends of the bottles, in particular the bottle closures. The corresponding annular contours or hollow-cylindrical contours are formed for this purpose, that end of the individual bottle which is provided with the closure being inserted into these contours. In particular in the case of individual bottles provided with the so-called neck ring, the neck ring is supported on the contours, which thus constitute a means for limiting plug-in depth. In particular in the case of PET bottles with a neck ring, this achieves load transfer, which makes it possible for such trays and bottles, a plurality of which are placed one upon the other, to be stacked securely.

It is preferably also provided that the third supporting contours are formed by hollows in the underside of the tray surface, the head regions of the bottles of a respective multipack being positioned in these hollows.

When used for arranging multipacks, the underside of the tray has the corresponding supporting contours in the form of hollows, in which the, for example, film-covered head regions of the bottles are positioned in order to achieve a certain degree of secure storage.

It is preferably also provided that the fourth supporting contours are formed by an undulating border which encloses the set-down surface of the tray and of which the undulating shape is adapted to the bottles introduced in the vicinity of the border, and/or by supporting parts which are arranged in the crossover region of an area in which four bottles are inserted in each case and have concave supporting surfaces adapted to the bottles.

These fourth supporting contours serve for accommodating the foot of individually inserted bottles, it being the case, once again, in this position that the underside of the tray forms the top side, that is to say the tray is turned. Here too, the inserted bottles are positioned and retained by the undulating border, additional supporting parts in the form of sleeve-like or spindle-like protrusions being provided in the crossover region, so that each bottle has a number of supports distributed over its circumference.

It may preferably be provided here that the supporting parts which are arranged along the separating line between adjacent multipacks project from the base supporting surface to a higher level than, for example to double the height of, the supporting parts which are directed specifically between the individual elements of a multipack.

As a result, the supporting parts, on the one hand, can perform their supporting function for accommodating individual bottles but, on the other hand, do not have any disruptive effect when used for multipacks.

It may preferably be provided, in addition, that the tray is enclosed all the way around the outside by a smooth border.

For certain transporting purposes in which such a tray is inserted into a corresponding recess and is transported by a rolling track onto a roller table or the like, it is provided that the smooth border is enclosed by a further, projecting border part which is at a lower level than the smooth border.

The further, projecting border serves as a support if the tray is inserted into a corresponding recess in which the tray, as such, engages, merely the additional border part engaging over the border of the hole or holes provided in the transporting element, the entire tray thus being positioned and secured.

In order to indicate the possible direction of use to the user, it is provided that a marking for the use position is provided on the outside of the border part.

The above therefore provides an arrangement which has the object of providing corresponding types of arrangements which are suitable, and intended, for accommodating multipacks in the form of, for example, four-packs or six-packs, position such multipacks and allow trays and such handling units to be stacked one upon the other and also allow the insertion of individual containers, in particular individual bottles, preferably with approximately equal spacings between the bottles in each case.

The above provides a solution in respect of this object. A preferred development of the invention is regarded as being one in which the first supporting contours are formed by an all-round supporting border on which the outer multipack contours formed by the containers or bottles of the multipack are supported, and by supporting surfaces or edges which form the standing surface of the top side of the tray, and by supporting edges or rings which are arranged beneath a multipack, in the narrowed regions between adjacent containers or bottles of the multipack, the second supporting contours are formed by annular contours or hollow-cylindrical contours which are formed in the standing surface of the top side of the tray and into which the head of the individual containers or individual bottles is respectively inserted, it being the case that, with individual bottles with a neck ring at the tapered head end, the neck ring is supported on the supporting contours, the third supporting contours are formed by hollows in the underside of the tray surface, the head regions of the containers or bottles of a respective multipack being positioned in these hollows, the fourth supporting contours are formed by column-like protrusions of the tray which support the foot region of an inserted individual container or of an inserted individual bottle at least on two sides, and by means of which the individual containers arranged in groups of four or six individual containers or individual bottles are kept pushed together in groups, and by supporting rings on which the foot regions of the individual containers or bottles can be set down.

This design, furthermore, makes it possible for each tray to be suitable, on the one hand, for accommodating multipacks in the form of four-packs or six-packs held together, for example, by shrink wrap or else for accommodating individual containers, in particular individual bottles. For use with multipacks, the tray is set down with the top side upwards and the multipacks are set down on the first supporting contours. A further, identical tray can then be placed, with the same orientation, on the head region of the multipacks, the underside having corresponding supporting contours which are adapted to the head region of the multipacks. This allows a stacking sequence of trays and multipacks. If the same tray is to be used for accommodating and for transporting individual containers, in particular individual bottles, the tray is turned, so that the top side then forms the underside and the underside forms the top side. The corresponding individual containers or individual bottles can then be inserted into the now upwardly oriented underside by way of the foot region, so that they are retained securely. A following tray can be placed, with the same orientation, on the head region of the individual containers or individual bottles. It is thus possible to form a corresponding stack with a succession of trays and individual containers or individual bottles. The two functions of the tray can be used to particularly good effect if, for example, reusable bottles are to be sold in the form of shrink-wrapped six-packs or in multipack units and at a later point in time, once they have been sold and the bottles have been emptied, the individual bottles can be returned using the same tray, which is merely turned through 180°. The corresponding design of the top sides and undersides of the tray here ensures that both the multipack units are securely positioned and retained between corresponding trays and the individual containers or individual bottles, which are inserted once the trays are turned, are positioned and oriented to good effect. Such trays can also be used for transporting filled individual containers or individual bottles, these trays being suitable, on account of their dimensions, for accommodating corresponding individual containers or individual bottles, and allowing them to be filled, at automatic filling stations. In the case of the trays being used for accommodating multipacks or the like, the first supporting contours are formed by an all-round supporting border of the tray on which the outer multipack contours formed by the containers or bottles of the multipack are supported, and by supporting surfaces or edges which form the standing surface of the top side of the tray, and by supporting edges or rings which are arranged beneath a multipack, in the narrowed regions between adjacent containers or bottles of the multipack. The second supporting contours are formed by annular contours or hollow-cylindrical contours which are formed in the standing surface of the top side of the tray and into which the head of the individual containers or individual bottles can respectively be inserted, it being the case that the individual bottles, if they are provided with a neck ring at the tapered head end, can be supported on the supporting contours by way of the neck ring. The third supporting contours are formed by hollows in the underside of the tray surface, the head regions of the containers or bottles of a respective multipack being positioned in these hollows. The fourth supporting contours are formed by column-like protrusions of the tray which support the foot region of an inserted individual container or an inserted individual bottle at least on two sides, and by means of which individual containers arranged in groups of a plurality of, for example four or six, individual containers or individual bottles are kept pushed together in groups, and by supporting rings on which the foot regions of the individual containers or bottles can be set down.

In order to achieve a non-slip arrangement of the multipack units and/or of the individual containers or individual bottles, it is further preferably provided that the top side of the supporting edges or rings and/or the supporting rings which form the fourth supporting contours and/or some side surfaces of the column-like protrusions which butt against the lateral surface of the inserted container and form the fourth supporting contours have an elastomeric or rubbery coating.

The tray itself is usually preferably formed from plastic, it being possible for the elastomeric or rubbery coating to be applied by way of two-component injection moulding during production of the tray.

In particular, it is additionally provided that the column-like protrusions which form the fourth supporting contours have an elastomeric or rubbery coating in the form of an elastically deformable supporting lip.

It is thus possible to compensate for diameter tolerances of inserted containers or the like, it additionally being the case with inserted containers that the supporting lips subject the containers to an elastic force which compresses them and pushes them together such that they are largely free of rattling within the area enclosed by the column-like protrusions. Likewise in order for containers with corresponding diameter tolerances to be accommodated to better effect, it is provided that the column-like protrusions which form the fourth supporting contours taper conically from the set-down plane of the tray to their free end.

A particularly preferred embodiment is regarded as being one in which the elastomeric or rubbery coating which is provided at the lateral free end region of the column-like protrusions is connected integrally, via a material bridge, to the coating of the supporting rings made of elastomeric or rubbery material. These bridges are however only optional.

This facilitates production because, for moulding the elastomeric or rubbery coating, injection need be carried out only in a single region since the material bridges form a connection between the supporting ring and the coatings provided on the column-like protrusions.

In order to achieve a non-slip arrangement of the tray, for example, on a standing surface or on a transporting pallet, it may additionally be provided that the all-round border of the tray is provided on the top side and/or underside with an elastic, friction-enhancing coating.

In order, when trays are stacked in the empty state, for the layers of trays stacked one upon the other to be secured, it is provided that the all-round border of the tray has a toothing formation on the top side and underside, teeth of the toothing formations engaging one inside the other when the trays are stacked directly one upon the other in the same direction.

In order to make it possible for the trays to be stacked not just in the same direction, but also in opposite directions or in an alternating manner, it is provided that the toothing formation along a respective peripheral edge is offset inwards or outwards over half the length of the peripheral edge, so that empty trays arranged in opposite directions can be stacked without any gaps between them, in which case the offset toothing rows of the lower and upper trays are located one beside the other in each case, or so that empty trays arranged in the same direction can be stacked without any gaps between them, in which case the teeth engage in tooth gaps in each case.

Using the above structure for enabling stacking the trays in both directions makes it possible to provide mixed stacks of drinks containers and multipacks, namely stacks which comprise multipack units in one layer as well as individual drinks containers in another layer interposing two trays between such different layers with reversed orientation. Furthermore it allows to combine different trays in one stack, so e.g. differently contoured trays for bottles or for cans or for bottles with different filling volumes, etc. So the proposed structure allows to combine in one stack layers of different types of multipacks and/or of different types individual drinks containers. This is exemplified in Figure 9 below.

It may also be desired for it to be possible for the trays of a certain user not to be stacked, when empty, with trays of another user, so that, when the trays are transported in the empty state, it is discernible as to whether the trays belong to the same system or not. For this purpose, it is provided that the teeth and/or teeth gaps of the trays of an identical system have the same shape and/or arrangement, trays of different systems having different shapes and/or arrangements, so that the trays of different systems have non-compatible toothing.

The teeth and/or tooth gaps may have different shapes, arrangements, sizes or orientations, this making it possible to provide something of a coded formation of teeth and tooth gaps on certain trays, so that only trays of this same-code system can be stacked with one another, but trays of a different system, with different toothing coding, cannot be properly stacked.

It may preferably be provided, in addition, that the tray comprises two parts each forming half a tray, the two parts having push-in connecting parts and/or plug-in connecting parts which can be connected to one another at the separating plane, so that the tray can be dismantled into two equally sized pieces or can be assembled into a unit from these pieces.

Such a dismantleable tray can be separated, for example, for transportation in the empty state, or assembled into a unit for transportation in the full state. For example, a first type of drink can be positioned on one half and a second type of drink can be positioned on the other half.

When half a layer is sold in a sales outlet, the vendor can release and remove the empty half-tray, so that the customer has quicker access to the as yet filled half tray.

Further preferred embodiments of the above arrangement are defined in the dependent claims.

### SHORT DESCRIPTION OF THE FIGURES

Exemplary embodiments of the invention are described in more detail hereinbelow and illustrated in the following drawings, in which:
- Figure 1: shows a tray according to a first embodiment as seen obliquely from above;

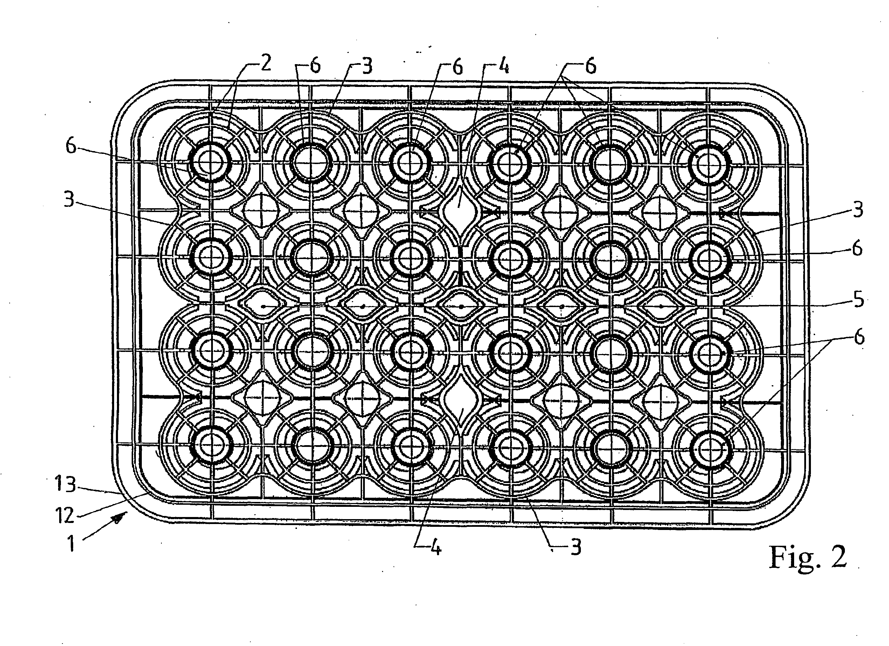

- Figure 2: shows a plan view of Figure 1;
- Figure 3: shows the tray according to the first embodiment as seen obliquely from beneath;
- Figure 4: shows a plan view of Figure 3;

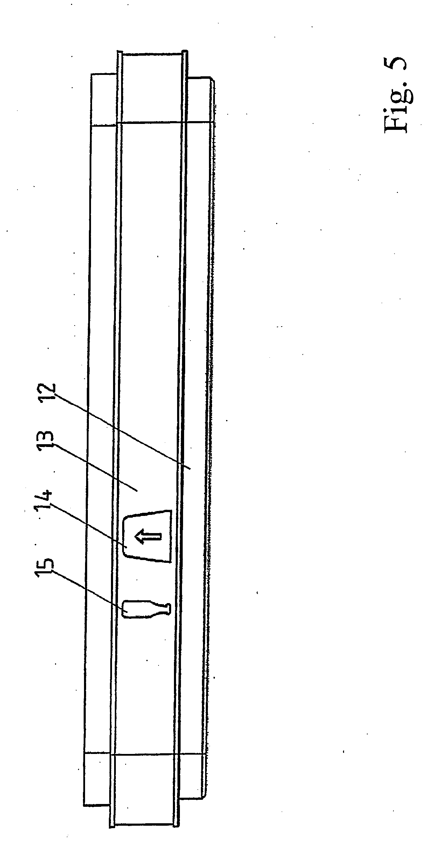

- Figure 5: shows a side view of the tray according to the first embodiment;
- Figure 6: shows a tray according a second embodiment, as seen obliquely from above, with the top side directed upwards;
- Figure 7: shows the same tray according to the second embodiment with the underside directed upwards;

### DETAILED DESCRIPTION OF THE PREFERRED EMBODIMENTS

The drawings 1-5 illustrate a first exemplary embodiment, namely an arrangement for transporting individual bottles and/or a plurality of handling units combined to form multipacks comprising a plurality of bottles, for example a six-pack, the bottles or handling units being held tightly together by means of a retaining element, for example by means of a shrink film, in a handling unit of rectangular basic shape.

The bottles are conventional bottles which taper in the direction of the dispensing opening and are provided with a closure and possibly, as is customary in the case of reusable PET bottles, with a so-called neck ring.

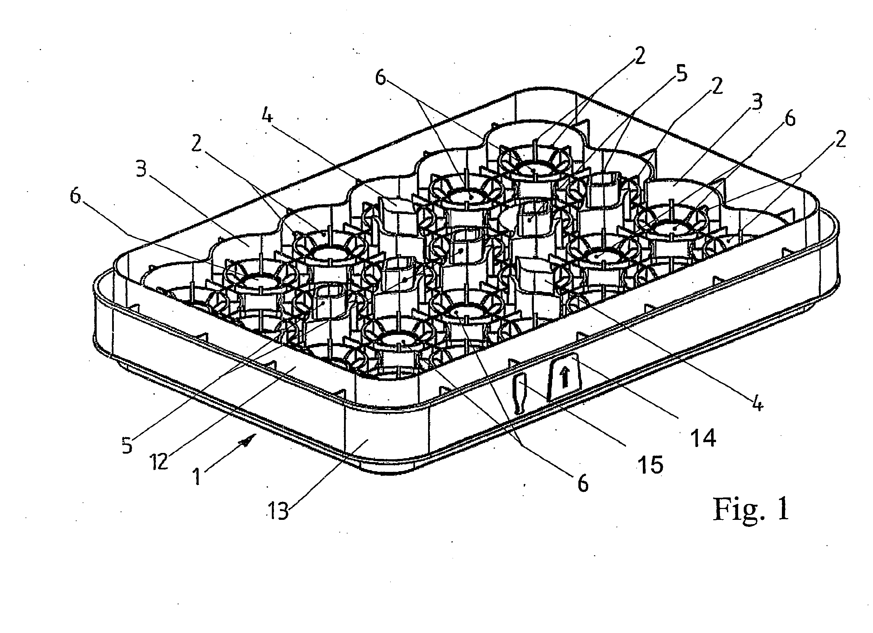

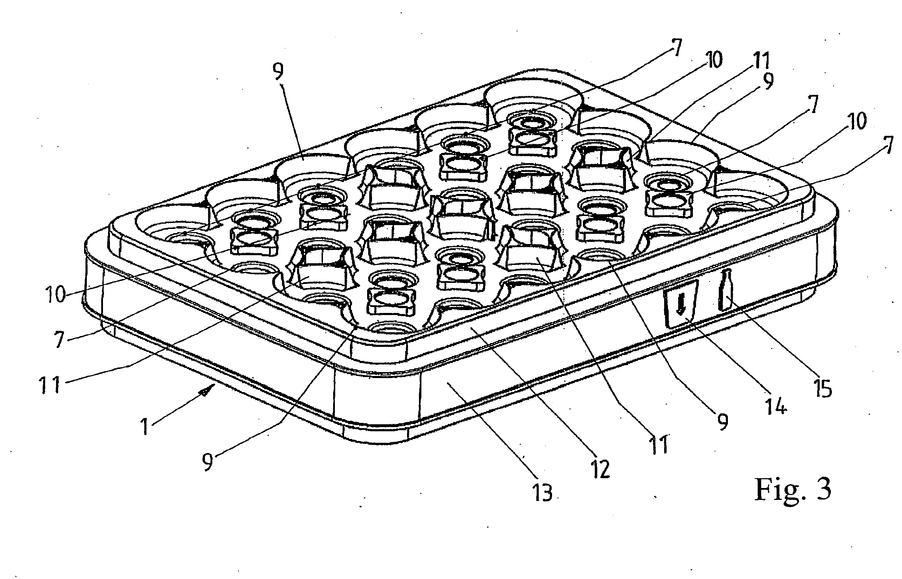

The arrangement comprises a tray 1 of essentially rectangular basic shape. The tray 1 has a top side, which can be seen for example in Figure 1, and an underside, which can be seen for example in Figure 3. The top side of the tray has first supporting contours 2, 3, 4, 5 which are adapted to the foot region of the unit combined to form a multipack and serve for accommodating the foot region of a plurality of multipacks arranged one beside the other. These supporting contours are formed, for example, by a grid or crosspieces 2, which form a standing plane for the foot region of the multipacks. The supporting contours 3 are also formed by an all-round undulating supporting border on which the outer multipack contours formed by the bottles of the multipack can be supported. Finally, supporting protrusions 4 and 5 are provided, these projecting from the standing plane, which is formed essentially by the grid or crosspieces 2, and engaging in the narrowed regions between adjacent multipacks. These narrowed regions form the positions in which is produced the respective interstice between adjacent bottles of two adjacent multipacks. In the case of the six-pack tray provided in the exemplary embodiment, four such six-element units are provided on the tray, the supporting protrusions 5 being arranged, between the insertion locations for the six-element units, in the longitudinal direction of the box and the two supporting protrusions 4 being arranged in the transverse direction of the box. With the tray oriented as is illustrated in Figure 1, it is thus possible for a multipack which forms a six-pack comprising two rows of in each case three bottles to be inserted into the corresponding recess between the protrusions 4 and 5 and the undulating border 3. Four such six-packs can be inserted into the tray 1. In addition to these contours, which are intended, and suitable, for positioning and accommodating a six-pack, further, second supporting contours 6 are provided on the top side of the tray, these being adapted to the head region of individual bottles and serving for accommodating the head region of a plurality of individual bottles inserted one beside the other with a spacing between them. These supporting contours 6 are formed by annular contours or hollow-cylindrical contours which are formed in the standing surface of the top side of the tray 1 and into which the head of the individual bottles is respectively inserted, it being the case that, with individual bottles with a neck ring at the tapered head end, the neck ring can be supported on the mouth of the annular contour or the like 6. The corresponding second supporting contours 6 are provided, at uniform spacings apart from one another, in rows of six such supporting contours one beside the other and four such supporting contours, so that it is possible for 24 individual bottles to be inserted.

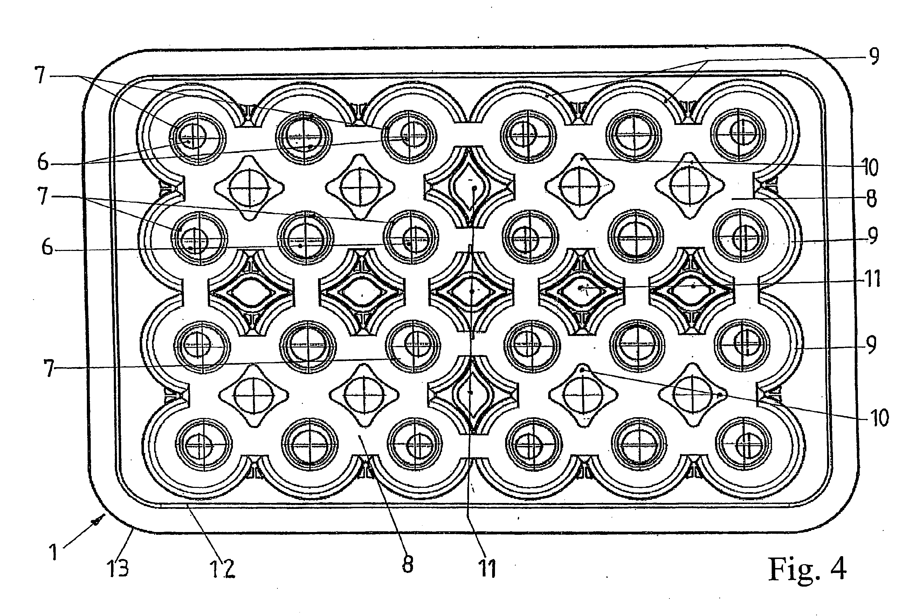

The underside of the tray 1, which is shown in Figure 3 and Figure 4, has third supporting contours 7 which are formed, for example, by hollows in the underside 8 of the tray, the head regions of the bottles of a respective multipack being positioned in these hollows. As can be seen, in particular from the illustration according to Figure 4, the spacings between the head regions of the multipack-forming bottles differ from those between the head regions of the individually inserted bottles, formed by the supporting contours 6. Also provided in the underside of the tray 1 are fourth supporting contours 9, 10, 11, which are adapted in shape to the foot region of individual bottles and serve for accommodating the foot region of a plurality of individual bottles inserted one beside the other with a spacing between them. These fourth supporting contours are formed by an undulating border 9 which encloses the set-down surface 8 of the tray 1, is closely adapted to the shape and the circumference of the individual bottle inserted, and encompasses the inserted bottle over a semicircle or, in the corner region, more or less over three quarters of a circle. Also provided are supporting parts 10 and 11 which are arranged in the crossover region of an area in which four bottles are inserted in each case and have concave supporting surfaces adapted to the shape of the bottles. If, therefore, individual bottles are inserted into the tray, by way of their foot region, in the positioning according to Figure 3, then they are positioned and retained to very good effect between the supporting parts 9, 10, 11. For the purpose of accommodating multipacks, a plurality of trays 1 can be arranged one above the other in the positioning according to Figure 1, the multipacks being positioned in the corresponding mount in each case between the trays 1. The multipacks are thus inserted into the tray 1, by way of the foot region, in the positioning according to Figure 1 and a further tray 1 is stacked, with the same positioning, onto the head region of the multipacks.

For arranging individual bottles, the tray 1 is turned upside down, as is shown in Figure 3. Individual bottles can then be inserted into the tray 1, in the position according to Figure 3, the bottles being precisely positioned. A further such tray 1 is placed in the same orientation, the supporting elements 6 engaging over the head region, in particular the closure of the individual bottles, so that a stacking position is achieved. A plurality of trays and multipacks or a plurality of trays and individual bottles can be positioned one above the other in this sequence. For transportation purposes, the corresponding stacks, which are formed from bottles and trays 1 or from multipacks and trays 1, are held together by a strapping means.

As can be seen, in particular, from Figure 3, the supporting parts 11, which extend along the separating line between adjacent multipacks, project from the base supporting surface 8 to a higher level than, for example to double the height of, the supporting parts 10 and are positioned specifically between the individual elements of the multipack.

As a result, when the tray 1 is used for multipacks, the supporting protrusions 10 do not have a disruptive effect since they are arranged in the region of the multipack-enclosing shrink film or the like in which there are no bottle-closure ends.

The tray 1 is preferably enclosed by a smooth border 12, which is enclosed by a further, projecting border part 13 which is at a lower level than the smooth border 12. A marking 14, 15 for the use position is provided on the outside of the border 13. 14 indicates the orientation of the tray 1 for accommodating multipacks, whereas the marking 15 specifies the orientation of the tray 1 for accommodating individual bottles.

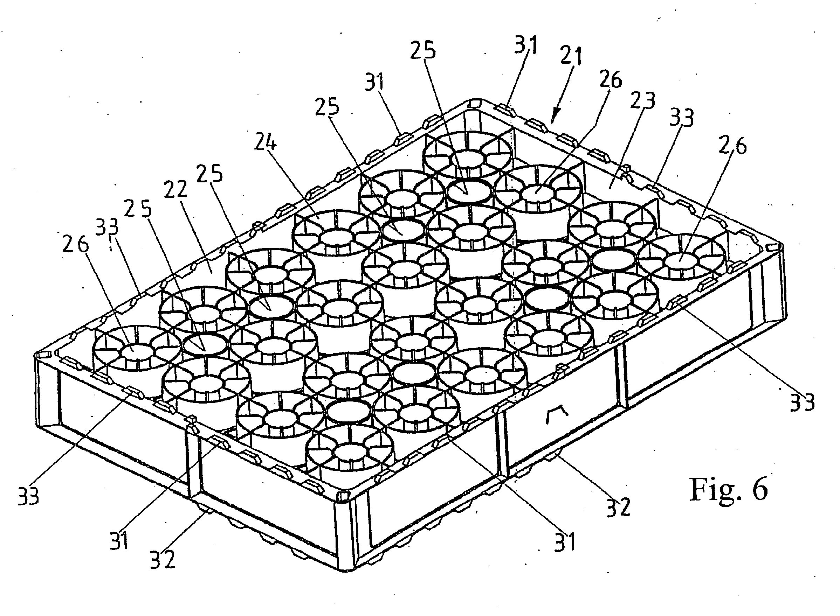

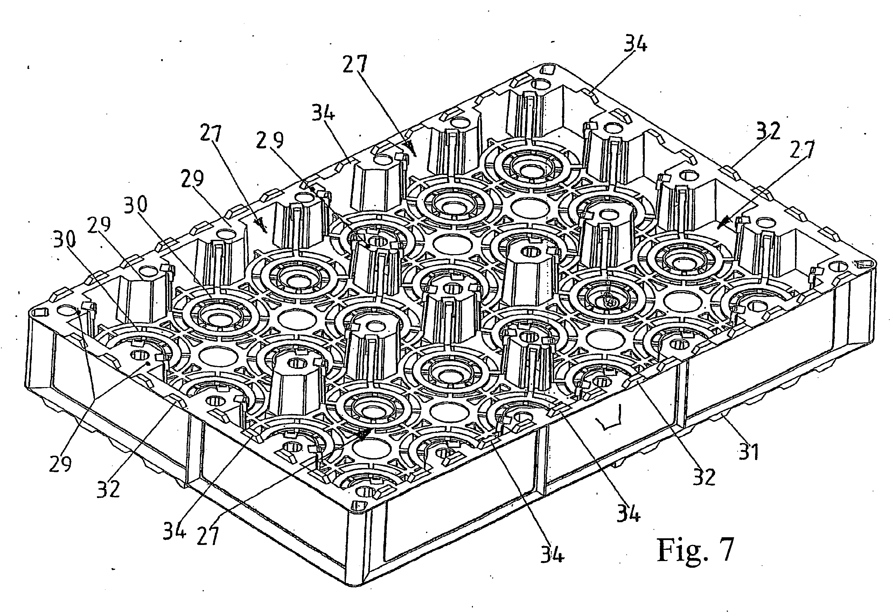

A second exemplary embodiment is illustrated in Figures 6 and 7. These drawings illustrate an arrangement for transporting drinks containers, in particular bottles, and/or a plurality of handling units combined to form multipacks comprising a plurality of drinks containers or bottles, for example a six-pack, the drinks containers or handling units being held tightly together by means of a retaining element, for example by means of a shrink film, to form a handling unit of square or rectangular basic shape. The arrangement comprises a tray 21 of essentially rectangular basic shape, the tray 21 having the top side which can be seen in Figure 6 and the underside which can be seen in Figure 7. The top side of the tray 21 has first supporting contours 22, 23, 24, 25 which are intended to allow the foot region of the multipacks to be properly set down and accommodated. It is possible here, in the second exemplary embodiment, for four multipacks in the form of six-packs to be arranged one beside the other in pairs in two rows in each case. Also provided are second supporting contours 26 which are adapted to the head region of individual containers or individual bottles and serve for accommodating the head region of a plurality of individual containers or individual bottles inserted one beside the other. The underside of the tray 21, which can be seen in Figure 7, has third supporting contours 27 which are adapted to the, for example, film-covered head region of the multipacks and serve for supporting the head region of the multipacks. Furthermore, the underside has fourth supporting contours 29, 30 which are adapted to the foot region of individual containers or individual bottles and serve for accommodating the foot region of a plurality of individual containers or individual bottles inserted one beside the other, in the second exemplary embodiment respective units of six individual containers or individual bottles in corresponding compartments which are adapted, in terms of size, for six such containers. For accommodating multipacks, a plurality of trays 21 can be arranged one above the other with the orientation according to Figure 6, the multipacks being positioned between the trays 21. In this case, the foot region of the multipacks is placed on the top side of the tray 21 according to Figure 6, while the underside of the following tray 21, which is oriented in the same way as the tray illustrated in Figure 6, is stacked on the head region of the multipacks.

In order to accommodate individual containers or individual bottles, the trays 21 are turned through 180° with the underside directed upwards and the top side directed downwards, as is shown in Figure 7. Individual containers or individual bottles can be positioned between the trays 21 oriented in this way, the trays 21 accommodating the foot region by way of the underside, and the top side of the following tray 21 being stacked on the head region of the individual containers or individual bottles.

In the exemplary embodiment, the first supporting contours 22, 23 are formed by an all-round supporting border of the tray 21, the supporting border projecting beyond the standing surface formed by the supporting surfaces 24 or edges. The outer multipack contours formed by the containers or bottles of the multipack can be supported on the supporting border 22, 23. Further supporting contours are formed by the supporting surfaces 24 or edges which form the standing surface of the top side of the tray 21 according to Figure 6. Also provided are supporting edges 25 or rings which are arranged beneath a multipack, in the narrowed regions between adjacent containers or bottles of the multipack. The second supporting contours 26 are formed by annular contours or hollow-cylindrical contours which are formed in the standing surface of he top side of the tray 21 and into which the head of the individual containers or individual bottles can be respectively inserted in the case of the use position according to Figure 7. It is possible here, in the case of individual bottles with neck rings, for these bottles to be supported on the supporting contours 26 by way of their neck rings. Third supporting contours 27 are formed by hollows in the underside of the tray surface, as can be seen in Figure 7. In the case of the stacking arrangement according to Figure 6, the head regions of the containers or bottles of a respective multipack are positioned in these hollows. Also provided are fourth supporting contours 29, 30 which are formed by column-like protrusions of the tray 21. Such column-like protrusions are spaced apart from one another in the corner regions and along the all-round border of the tray 21, so that the insertion location for a bottle or a container in each case is enclosed on two sides. In addition, for delimiting a six-pack compartment by means of the tray 21, yet further column-like protrusions 29 are arranged in a crosswise manner. In the case of the arrangement according to Figure 7, these supporting contours 29, 30 support an inserted individual container or an inserted individual bottle laterally in the vicinity of the foot region at least on two sides, the individual containers arranged in groups of six individual containers or individual bottles being kept pushed against one another in groups. These individual containers or individual bottles here stand on supporting rings 30.

In order to reduce noise and safeguard against slipping to a certain extent, the top side of the supporting edges 25 or rings and/or the supporting rings which form the fourth supporting contours 30 and/or some side surfaces of the column-like protrusions 29 which butt against the lateral surface of an inserted container and form the fourth supporting contours 29 have an elastomeric or rubbery coating. The column-like protrusions which form the fourth supporting contours 29 have an elastomeric or rubbery coating in the form of an elastically deformable supporting lip in the vicinity of their top end. Furthermore, the column-like protrusions which form the fourth supporting contours 29 taper from the set-down plane of the tray 21 to their free ends. It is thus possible for containers with diameter tolerances corresponding to the usual production tolerances to be securely inserted and retained, the elastic supporting lips and also the conical shape of the column-like protrusions ensuring that the containers are more securely accommodated and seated in the tray 21.

As can be seen, in particular, from Figure 7, the elastomeric or rubbery coating which is provided at the lateral free end region of the column-like protrusions is connected integrally, via a material bridge, to the coating of the supporting rings (at 30) made of elastomeric or rubbery material, so that the production outlay is rationalized.

It is also possible for the all-round border of the tray 21 to be provided on the top side and/or underside with an elastic friction-enhancing coating. This coating may also be provided in the form of toothing formations or similar protrusions.

The all-round border of the tray 21 has a toothing formation 31 to 34 on the top side and underside, the teeth of the toothing formations 31 to 34 engaging one inside the other when the trays 21 are stacked directly one upon the other in the same direction. The toothing formation 31, 33 or 32, 34 along a respective peripheral edge is offset inwards or outwards over half the length of the peripheral edge, so that empty trays 21 arranged in opposite directions can be stacked without any gaps between them, in which case the offset toothing rows 31, 33 or 32, 34 of the lower and upper trays 21 are located one beside the other in each case. With empty trays 21 arranged in the same direction, gap-free stacking of the trays 21 one upon the other is made possible, in which case the teeth of the toothing rows 31, 33 or 32, 34 engage in the tooth gaps of the other tray 21 in each case. If it is desired, the teeth and/or tooth gaps of the tray 21 of an identical system may have the same shape and/or arrangement, so that gap-free staking of empty trays is made possible. Trays of different systems have different shapes and/or arrangements of teeth and/or tooth gaps, so that these trays can be stacked with one another, but not with the trays of a different system.

The invention provides an outstanding arrangement for transporting bottles, drinks containers or bottle multipacks or the like. It is easily possible here to accommodate containers with small diameter tolerances, and, in particular in the case of individual containers or individual bottles being introduced, a block formation is made possible by the elastic lips or the like. The arrangement of the elastic lips can compensate for differences in diameter of, for example, up to 3 mm. By virtue of the toothing formation in the border region, it is possible for the corresponding trays 21 to be stacked as desired in the empty state and combined to form an assembly. In the case of multipacks, for example in the form of box packs, it is easily possible to remove the multipacks from the corresponding tray 21, it being ensured that the multipacks and trays are held securely one above the other in the stacked assembly because securing takes place essentially in the head region. As soon as the upper tray is removed, however, the multipack unit located on the lower tray can easily be removed by the consumer or the like.

One of the basic ideas of the invention is that, by means of a tray with two useable sides, multipacks in the form of shrink-wrap packs or the like can be securely retained and displayed using one side of the tray and individual bottles or containers or strip packs can be securely retained and displayed using the opposite side in each case. The user thus has a large amount of freedom in using such trays for different forms of pack. The number of trays in circulation is therefore minimized overall. The two functions of the tray 21 can be utilized to particularly optimum effect if, for example, reusable bottles are to be sold in the form of shrink-wrapped six-packs or in multipack boxes and the individual bottles can be returned using the same tray, which has merely been turned round. One result of the invention is that, by virtue of this tray design, the level of investment required for procuring the trays is reduced, the supply and storage costs being additionally minimized by reciprocal usage. There is also a reduction in trade handling and sorting costs, a higher turnover being achieved in addition.

Rather than being restricted to the exemplary embodiments, the invention can be varied in a number of different ways within the framework of the disclosure.

The above exemplary embodiments are intending to illustrate the invention and shall not be construed to limit the scope of the invention as defined in the appended claims.

All novel individual features and combinations of features disclosed in the description and/or drawing are considered to be essential to the invention.

## Claims

1. Arrangement for transporting drinks containers, in particular bottles and/or a plurality of handling units combined to form multipacks comprising a plurality of drinks containers or bottles, for example a four-pack or a six-pack, the drinks containers and/or handling units being held tightly together by means of a retaining element, for example by means of a shrink film or similar film packaging, to form a single handling unit of preferably square or rectangular basic shape, the arrangement comprising a tray (1,21) of essentially rectangular basic shape, and the tray (1,21) having a top side and an underside, **characterized in that** the top side of the tray (1,21)
- has first supporting contours (2, 3, 4, 5, 22, 23, 24, 25) which are adapted to the foot region of the multipacks and serve for accommodating the foot region of a plurality of multipacks arranged one beside the other,
- has second supporting contours (6, 26) which are adapted to the head region of individual containers or individual bottles and serve for accommodating the head region of a plurality of individual containers or individual bottles inserted one beside the other,
the underside of the tray (1, 21)
- has third supporting contours (7, 27) which are adapted, for example, to the film-covered head region of the multipacks and serve for supporting purposes on the head region of the multipacks,
- has fourth supporting contours (9, 10, 11, 29, 30) which are adapted to the foot region of individual containers or individual bottles and serve for accommodating the foot region of a plurality of individual containers or individual bottles inserted one beside the other,
- that, preferably for accommodating multipacks, a plurality of trays (1, 21) can be arranged one above the other and the multipacks are positioned between the trays (1, 21), the foot region of the multipacks being placed on the top side of the trays (1, 21) and the underside of the following tray (1, 21) being stacked on the head region of the multipacks, or
- that, preferably for accommodating individual containers or individual bottles, the trays (1, 21) are placed in the position in which they are turned through 180°, with the underside oriented upwards and the top side oriented downwards, and individual containers or individual bottles are positioned between the trays (1, 21), the trays (1, 21) accommodating the foot region by way of the underside and being stacked on the head region of the individual containers or individual bottles by way of the top side of the following tray (1, 21),
- that a stack of trays (1, 21) and multipacks and/or of trays (1, 21) and individual containers or individual bottles is formed.

2. Arrangement according to Claim 1, **characterized in that** the stack formed from bottles and trays (1) or from multipacks and trays (1) is held together by a strapping means.

3. Arrangement according to Claim 1 or 2, **characterized in that** the first supporting contours are formed by an all-round undulating supporting border (3), on which the outer multipack contours formed by the bottles of the multipack are supported, and/or by supporting protrusions (4, 5), which project from the standing surface of the top side of the tray (1), this standing surface being formed by crosspieces (2), and engage in the narrowed regions between adjacent multipacks.

4. Arrangement according to one of Claims 1 to 3, **characterized in that** the second supporting contours are formed by annular contours (6) or hollow-cylindrical contours which are formed in the standing surface of the top side of the tray (1) and into which the head of the individual bottles is respectively inserted, it being the case that, with individual bottles with a neck ring at the tapered head end, the neck ring is supported on the contours (6) and/or it being the case that for accommodating sealed and/or unsealed crown sealed bottles the annular contours (6) or hollow-cylindrical contours comprise radially inwardly extending tongues which are bent towards an axial direction such that they may either abut onto a crown cork of a sealed bottle or engage in a self-centering manner with the opening of unsealed bottles.

5. Arrangement according to one of Claims 1 to 4, **characterized in that** the third supporting contours are formed by hollows (7) in the underside of the tray surface, the head regions of the bottles of a respective multipack being positioned in these hollows.

6. Arrangement according to one of Claims 1 to 5, **characterized in that** the fourth supporting contours are formed by an undulating border (9), which encloses the set-down surface (8) of the tray (1) and of which the undulating shape is adapted to the bottles inserted in the vicinity of the border, and/or by supporting parts (10, 11), which are arranged in the crossover region of an area in which groups of preferably four bottles are inserted in each case and have concave supporting surfaces adapted to the bottles.

7. Arrangement according to Claim 6, **characterized in that** the supporting parts (11), which are arranged along the separating line between adjacent multipacks, project from the base supporting surface (8) to a higher level than, for example to double the height of, the supporting parts (10), which are directed specifically between the individual elements of a multipack.

8. Arrangement according to one of Claims 1 to 7, **characterized in that** the tray (1) is enclosed all the way around the outside or only partially by a smooth border (12).

9. Arrangement according to Claim 8, **characterized in that** the smooth border (12) is enclosed by a further, projecting border part (13) which is at a lower level than the smooth border (12).

10. Arrangement according to one of Claims 1 to 9, **characterized in that** a marking (14, 15) for the use position is provided on the outside of the border part (13).

11. Arrangement according to one of Claims 1 to 10, **characterized in that**
- the first supporting contours (2, 3, 4, 5, 22, 23) are formed by an all-round supporting border on which the outer multipack contours formed by the containers or bottles of the multipack are supported, and by supporting surfaces (24) or edges which form the standing surface of the top side of the tray (1, 21), and by supporting edges (25) or rings which are arranged beneath a multipack, in the narrowed regions between adjacent containers or bottles of the multipack, and/or
- the second supporting contours (6, 26) are formed by annular contours or hollow-cylindrical contours which are formed in the standing surface of the top side of the tray (1, 21) and into which the head of the individual containers or individual bottles is respectively inserted, it being the case that, with individual bottles with a neck ring at the tapered head end, the neck ring is supported on the supporting contours (26), and/or
- the third supporting contours (7, 27) are formed by hollows in the underside of the tray surface, the head regions of the containers or bottles of a respective multipack being positioned in these hollows, and/or
- the fourth supporting contours (9, 10, 11, 29, 30) are formed by column-like protrusions of the tray (1, 21) which support the foot region of an inserted individual container or of an inserted individual bottle at least on two sides, and by means of which the individual containers arranged in groups of preferably two, three, four or six individual containers or individual bottles are kept pushed together in groups, and by supporting rings on which the foot regions of the individual containers or bottles can be set down.

12. Arrangement according to any of the preceding Claims, **characterized in that** the top side of the supporting edges (25) or rings and/or the supporting rings which form the fourth supporting contours (30) and/or some side surfaces of the column-like protrusions which butt against the lateral surface of the inserted container and form the fourth supporting contours (29) have an elastomeric or rubbery coating.

13. Arrangement according to Claim 12, **characterized in that** the column-like protrusions which form the fourth supporting contours (29) have an elastomeric or rubbery coating in the form of an elastically deformable supporting lip.

14. Arrangement according to any of the preceding Claims, **characterized in that** the column-like protrusions which form the fourth supporting contours (29) taper conically from the set-down plane of the tray (1, 21) to their free end.

15. Arrangement according to one of Claims 12 to 14, **characterized in that** the elastomeric or rubbery coating which is provided at the lateral free end region of the column-like protrusions is connected integrally, preferably via a material bridge, to the coating of the supporting rings made of elastomeric or rubbery material.

16. Arrangement according to any of the preceding Claims, **characterized in that** the all-round border of the tray (1, 21) is provided on the top side and/or underside with an elastic, friction-enhancing coating.

17. Arrangement according to any of the preceding Claims, **characterized in that** the all-round border of the tray (1, 21) has a toothing formation (31-34) on the top side and underside, teeth of the toothing formations engaging one inside the other when the trays (1, 21) are stacked directly one upon the other in the same direction.

18. Arrangement according to Claim 17, **characterized in that** the toothing formation along a respective peripheral edge is offset inwards or outwards over half the length of the peripheral edge, so that empty trays (1, 21) arranged in opposite directions can be stacked without any gaps between them, in which case the offset toothing rows of the lower and upper trays (1, 21) are located one beside the other in each case, or so that empty trays (1, 21) arranged in the same direction can be stacked without any gaps between them, in which case the teeth engage in tooth gaps in each case.

19. Arrangement according to either of Claims 17 and 18, **characterized in that** the teeth andlor tooth gaps of the trays (1, 21) of an identical system have the same shape and/or arrangement, trays (1, 21) of different systems having different shapes and/or arrangements, so that the trays (1, 21) of different systems have non-compatible toothing.

20. Arrangement according to any of the preceding Claims, **characterized in that** the tray (1, 21) comprises two parts each forming half a tray (1, 21), the two parts having push-in connecting parts and/or plug-in connecting parts which can be connected to one another at the separating plane, so that the tray (1, 21) can be dismantled into two equally sized pieces or can be assembled into a unit from these pieces.

## Patentansprüche

1. Vorrichtung zum Transport Flüssigkeitsbehältern, insbesondere von Flaschen und/oder von mehreren zu Gebinden von mehreren Flüssigkeitsbehältern oder Flaschen zusammengefassten Handhabungseinheiten, zum Beispiel einem Viererpack oder einem Sechserpack, die mittels eines zusammenhaltenden Elementes, zum Beispiel mittels einer Schrumpffolie oder dergleichen Folienverpackung, zu einer Handhabungseinheit mit bevorzugtermassen quadratischer oder rechteckiger Grundform eng zusammengehalten sind, bestehend aus einem Tray (1, 21) mit im Wesentlichen rechteckiger Grundform, wobei das Tray (1, 21) eine Oberseite und eine Unterseite aufweist, **dadurch gekennzeichnet, dass** die Oberseite des Trays (1, 21)
- erste Stützkonturen (2, 3, 4, 5, 23,23, 24,25) aufweist, die dem Fussbereich der Gebinde angepasst sind und zur Aufnahme des Fussbereichs von mehreren nebeneinander angeordneten Gebinden dienen,
- zweite Stützkonturen (6, 26) aufweist, die dem Kopfbereich von einzelnen Flüssigkeitsbehältern oder Einzelflaschen angepasst sind und zur Aufnahme des Kopfbereiches von mehreren nebeneinander angeordneten Flüssigkeitsbehältern oder Einzelflaschen dienen,
die Unterseite des Trays (1, 21)
- dritte Stützkonturen (7, 27) aufweist, die, zum Beispiel, dem mit Folie überspannten Kopfbereich der Gebinde angepasst sind und zur Stützung am Kopfbereich der Gebinde dienen,
- vierte Stützkonturen (9, 10, 11, 29,30) aufweist, die dem Fussbereich von einzelnen Flüssigkeitsbehältern oder Einzelflaschen angepasst sind und zur Aufnahme des Fussbereichs von mehreren nebeneinander eingestellten einzelnen Flüssigkeitsbehältern oder Einzelflaschen dienen,
- dass vorzugsweise zur Aufnahme von Gebinden mehrere Trays (1, 21) übereinander anzuordnen sind und zwischen den Trays (1, 21) die Gebinde positioniert sind, wobei auf die Oberseite der Trays (1, 21) der Fussbereich der Gebinde aufgesetzt ist und die Unterseite des folgenden Trays (1, 21) auf den Kopfbereich der Gebinde aufgestapelt ist, oder
- dass vorzugsweise zur Aufnahme von einzelnen Flüssigkeitsbehältern oder Einzelflaschen die Trays (1, 21) in um 180 deg. gewendeter Position mit nach oben weisender Unterseite und nach unten weisender Oberseite positioniert sind und zwischen den Trays (1, 21) einzelne Flüssigkeitsbehälter oder Einzelflaschen positioniert sind, wobei die Trays (1, 21) mit der Unterseite den Fussbereich aufnehmen und mit der Oberseite des folgenden Trays (1, 21) auf den Kopfbereich der einzelnen Flüssigkeitsbehälter oder Einzelflaschen aufgestapelt sind,
- wobei vorzugsweise jeweils ein Stapel aus Trays (1, 21) und/oder Gebinden oder aus Trays (1, 21) und einzelnen Flüssigkeitsbehältern oder Einzelflaschen gebildet ist.

2. Vorrichtung nach Anspruch 1, **dadurch gekennzeichnet, dass** der aus Flaschen und Trays (1) oder aus Gebinden und Trays (1) gebildete Stapel durch eine Umreifung zusammengehalten ist.

3. Vorrichtung nach Anspruch 1 oder 2, **dadurch gekennzeichnet, dass** die ersten Stützkonturen durch einen umlaufenden gewellten Stützrand (3) gebildet sind, an dem sich die durch die Flaschen des Gebindes gebildeten äusseren Konturen des Gebindes abstützen, und/oder durch Stützvorsprünge (4, 5), die von der Aufstandsfläche der Oberseite des Trays (1), die durch Stege (2) gebildet ist, abragen und in die taillierten Bereiche zwischen benachbarten Gebinden eingreifen.

4. Vorrichtung nach einem der Ansprüche 1 bis 3, **dadurch gekennzeichnet, dass** die zweiten Stützkonturen durch in der Aufstandsfläche der Oberseite des Trays (1) ausgebildete Ringkonturen (6) oder Hohlzylinderkonturen gebildet sind, in die jeweils der Kopf der Einzelflaschen eingesetzt ist, wobei bei Einzelflaschen mit Neckring am verjüngten Kopfende der Neckring sich an den Konturen (6) abstützt und/oder wobei für die Aufnahme von verschlossenen oder unverschlossenen Kronkorken-Flaschen die Ringkonturen (6) oder Hohlzylinderkonturen radial sich nach innen erstreckende Zungen aufweisen, welche in eine axialer Richtung gebogen sind, so dass sie entweder in Auflage mit einem Kronkorken einer verschlossenen Flasche kommen oder in einer selbstzentrierenden Weise mit der Öffnung einer unverschlossenen Flasche in Eingriff kommen.

5. Vorrichtung nach einem der Ansprüche 1 bis 4, **dadurch gekennzeichnet, dass** die dritten Stützkonturen durch Einsenkungen (7) in der Unterseite der Trayfläche gebildet sind, in denen die Kopfbereiche der Flaschen jeweils eines Gebindes positioniert sind.

6. Vorrichtung nach einem der Ansprüche 1 bis 5, **dadurch gekennzeichnet, dass** die vierten Stützkonturen durch einen die Stellfläche (8) des Trays (1) umgebenden gewellten Rand (9) gebildet sind, dessen Wellenform den randnah eingestellten Flaschen angepasst ist, und/oder durch im Kreuzungsbereich eines Einstellfeldes für jeweils Gruppen von, vorzugsweise vier Flaschen angeordnete Stützteile (10, 11) mit konkaven, den Flaschen angepassten Stützflächen.

7. Vorrichtung nach Anspruch 6, **dadurch gekennzeichnet, dass** die Stützteile (11), die entlang der Trennlinie zwischen benachbarten Gebinden angeordnet sind, höher als, beispielsweise doppelt so hoch wie die Stützteile (10) von der Bodenstützfläche (8) abragen, die zwischen die Einzelelemente eines Gebindes zielend gerichtet sind.

8. Vorrichtung nach einem der Ansprüche 1 bis 7, **dadurch gekennzeichnet, dass** das Tray (1) aussen umlaufend oder nur teilweise von einem glatten Rand (12) umgeben ist.

9. Vorrichtung nach Anspruch 8, **dadurch gekennzeichnet, dass** der glatte Rand (12) von einem vorkragenden weiteren Randteil (13) umgeben ist, das geringe Höhe als der glatte Rand (12) aufweist.

10. Vorrichtung nach einem der Ansprüche 1 bis 9, **dadurch gekennzeichnet, dass** aussen auf dem Randteil (13) eine Kennzeichnung (14, 15) für die Gebrauchsposition vorgesehen ist.

11. Vorrichtung nach einem der Ansprüche 1-10, **dadurch gekennzeichnet, dass**
- die ersten Stützkonturen (2, 3, 4, 5, 22, 23) durch einen umlaufenden Stützrand gebildet werden, durch welchen die äußeren, durch die Behälter oder Flaschen der Mehrfachpackungen gebildeten Konturen gestützt werden, sowie durch Stützflächen (24) oder
- kanten, welche die Aufstandsfläche auf die Oberseite des Tray (1,21) bilden, und durch Stützkanten (25) oder Ringe, welche unterhalb der Mehrfachpackung angeordnet sind, in der verjüngten Region zwischen benachbarten Behältern oder Flaschen der Mehrfachpackung, und/oder
- die zweiten Stützkonturen (6,26) gebildet sind durch ringförmige Konturen oder hohlzylindrische Konturen, welche in der Aufstandsfläche der Oberseite des Tray (1,21) gebildet sind, und in welche die Hälfte der einzelnen Behälter oder Einzelflaschen eingeführt sind, wobei, im Falle von Flaschen mit einem Neckring am zulaufenden Flaschenkopf, der Neckring auf den Stützkonturen (26) abgestützt ist, und/oder
- die dritten Stützkonturen (7,27) gebildet sind durch Ausnehmungen in der Unterseite der Tray-Fläche, wobei die Halsregionen der Behälter oder Flaschen einer entsprechenden Mehrfachpackung in diesen Ausnehmungen angeordnet sind, und/oder
- die vierten Stützkonturen (9, 10, 11, 29,30) gebildet sind durch säulenartige Vorsprünge des Tray (1,21), welche die Fußregion eines eingeführten individuellen Flüssigkeitsbehälters oder einer Einzelflasche auf wenigstens zwei Seiten stützen, und unter Zuhilfenahme von welchen die individuellen Behälter in zusammengefassten Gruppen von wenigstens zwei, drei, vier oder sechs individuellen Behältern oder Einzelflaschen in diesen Gruppen zusammengehalten werden, und durch Stützringe, auf welche die Fußbereiche der einzelnen Behälter oder Flaschen aufgesetzt werden können.

12. Vorrichtung nach einem der vorhergehenden Ansprüche, **dadurch gekennzeichnet, dass** die Oberseite der Stützkonturen (25) oder -ringe und/oder die Stützringe, die die vierten Stützkonturen (30) bilden, und/oder Seitenflächen der säulenartigen Vorsprünge, welche gegen die lateralen Oberflächen der eingeführten Behälter stoßen, und die vierten Stützkonturen (29) bilden, eine elastomere oder gummiartige Beschichtung aufweisen.

13. Vorrichtung nach Anspruch 12, **dadurch gekennzeichnet, dass** die säulenartigen Vorsprünge, die die vierten Stützkonturen (29) bilden, eine elastomere oder gummiartige Beschichtung in Form einer elastisch deformierbaren Stützlippe aufweisen.

14. Vorrichtung nach einem der vorhergehenden Ansprüche, **dadurch gekennzeichnet, dass** die säulenartigen Vorsprünge, die die vierten Stützkonturen (29) bilden, ausgehend von der Aufstandsfläche des Tray (1,21) konisch zu ihrem freien Ende zu laufen.

15. Vorrichtung nach einem der vorhergehenden Ansprüche 12-14, **dadurch gekennzeichnet, dass** die elastomere oder gummiartige Beschichtung, welche an der lateralen freien Endregion der säulenartigen Vorsprünge angeordnet ist, integral verbunden ist, vorzugsweise über eine Materialbrücke, mit der Beschichtung von Stützringen aus einem elastomeren oder gummiartigen Material.

16. Vorrichtung nach einem der vorhergehenden Ansprüche, **dadurch gekennzeichnet, dass** der umlaufende Rand des Tray (1,21) an der Oberseite und/oder Unterseite mit einer elastischen, die Reibung reduzierenden Beschichtung versehen ist.

17. Vorrichtung nach einem der vorhergehenden Ansprüche, **dadurch gekennzeichnet, dass** der umlaufende Rand des Tray (1,21) eine gezahnte Ausbildung (31-34) an der Oberseite und/oder der Unterseite aufweist, wobei die Zähne der gezahnten Ausbildung ineinander eingreifen, wenn die Trays (1,21) direkt aufeinander gestellt werden in der gleichen Ausrichtung.

18. Vorrichtung nach Anspruch 17, **dadurch gekennzeichnet, dass** die gezahnte Ausbildung entlang einer entsprechenden peripheren Kante nach innen oder nach außen über die Hälfte der Länge der Kante versetzt ist, so dass leere Trays (1,21), die in unterschiedlicher Richtung angeordnet sind, aufeinander gestapelt werden können, ohne dass dazwischen liegende Zwischenräume entstehen, wobei dann die versetzten gezahnten Ausbildungen von den unteren und oberen Trays (1,21) nebeneinander angeordnet sind, oder so dass leere Trays (1,21), die in gleicher Richtung angeordnet sind, ebenfalls ohne dazwischen liegende Zwischenräume gestapelt werden können, wobei dann die gezahnten Ausbildung ineinander greifen.

19. Vorrichtung nach entweder Anspruch 17 oder 18, **dadurch gekennzeichnet, dass** die Zähne und/oder die Zwischenräume zwischen den Zähnen der Trays (1,21) eines identischen Systems die gleiche Form und/oder Anordnung haben, jene von unterschiedlichen Systemen unterschiedliche Formen und/oder Anordnungen haben, so dass Trays (1,21) von unterschiedlichen Systemen nicht-kompatible gezahnte Ausbildungen aufweisen.

20. Vorrichtung nach einem der vorhergehenden Ansprüche, **dadurch gekennzeichnet, dass** der Tray (1,21) zwei Teile aufweist, wobei jeder der Teile einen halben Tray (1,21) bildet, wobei die beiden Teile ineinanderschiebbare Verbindungselemente aufweisen oder steckbare Verbindungselemente, welche in der Trennebene miteinander verbunden werden können, so dass der Tray (1,21) in zwei gleich große Teile auseinandergenommen werden kann oder wieder zusammengesetzt werden kann unter Ausbildung einer Gesamteinheit aus diesen zwei Teilen.

## Revendications

1. Ensemble pour le transport de récipients pour boissons, notamment de bouteilles et/ou d'une pluralité d'unités de manutention combinées pour former des emballages multiples comprenant une pluralité de récipients pour boissons ou de bouteilles, par exemple un emballage à quatre éléments ou un emballage à six éléments, les récipients pour boissons et/ou les unités de manutention étant maintenus fermement ensemble au moyen d'un élément de retenue, par exemple au moyen d'un film rétractable ou d'un film d'emballage similaire, pour former une unité de manutention unique de préférence de forme de base carrée ou rectangulaire, l'ensemble comprenant un plateau (1, 21) de forme de base essentiellement rectangulaire, et le plateau (1, 21) ayant un côté supérieur et un côté inférieur, **caractérisé en ce que** le côté supérieur du plateau (1, 21) comprend :
- des premiers contours de maintien (2, 3, 4, 5, 22, 23, 24, 25) qui sont adaptés à la région de pied des emballages multiples et servent à loger la région de pied d'une pluralité d'emballages multiples agencés les uns à côté des autres ;
- des deuxièmes contours de maintien (6, 26) qui sont adaptés à la région de tête des récipients individuels ou des bouteilles individuelles et servent à loger la région de tête d'une pluralité de récipients individuels ou de bouteilles individuelles insérés les uns à côté des autres ;
le côté inférieur du plateau (1, 21) comprend :
- des troisièmes contours de maintien (7, 27) qui sont adaptés, par exemple, à la région de tête recouverte d'un film des emballages multiples et servent à des fins de maintien sur la région de tête des emballages multiples ;
- des quatrièmes contours de maintien (9, 10, 11, 29, 30) qui sont adaptés à la région de pied des récipients individuels ou des bouteilles individuelles et servent à loger la région de pied d'une pluralité de récipients individuels ou de bouteilles individuelles insérés les uns à côté des autres ;
**en ce que**, de préférence pour loger des emballages multiples, une pluralité de plateaux (1, 21) peuvent être agencés les uns au-dessus des autres et les emballages multiples sont positionnés entre les plateaux (1, 21), la région de pied des emballages multiples étant placée sur le côté supérieur des plateaux (1, 21) et le côté inférieur du plateau (1, 21) suivant étant empilé sur la région de tête des emballages multiples ; ou
**en ce que**, de préférence pour loger des récipients individuels ou des bouteilles individuelles, les plateaux (1, 21) sont placés dans la position dans laquelle ils sont tournés de 180°, avec le côté inférieur orienté vers le haut et le côté supérieur orienté vers le bas, et les récipients individuels ou les bouteilles individuelles sont positionnés entre les plateaux (1, 21), les plateaux (1, 21) logeant la région de pied par le côté inférieur et étant empilés sur la région de tête des récipients individuels ou des bouteilles individuelles à l'aide du côté supérieur du plateau (1, 21) suivant ;
**en ce qu'**un empilement de plateaux (1, 21) et d'emballages multiples et/ou de plateaux (1, 21) et de récipients individuels ou de bouteilles individuelles est formé.

2. Ensemble selon la revendication 1, **caractérisé en ce que** l'empilement formé à partir des bouteilles et des plateaux (1) ou à partir des emballages multiples et des plateaux (1) est maintenu ensemble par des moyens de sanglage.

3. Ensemble selon la revendication 1 ou 2, **caractérisé en ce que** les premiers contours de maintien sont formés par une bordure de maintien (3) ondulée close sur laquelle les contours extérieurs de l'emballage multiple formés par les bouteilles de l'emballage multiple sont maintenues, et/ou par les saillies de maintien (4, 5) qui ressortent de la surface portante du côté supérieur du plateau (1), ladite surface portante étant formée par des pièces transversales (2) et s'engrenant dans les régions rétrécies positionnées entre les emballages multiples adjacents.

4. Ensemble selon l'une quelconque des revendications 1 à 3, **caractérisé en ce que** les deuxièmes contours de maintien sont formés par des contours annulaires (6) ou des contours cylindriques creux qui sont formés dans la surface portante du côté supérieur du plateau (1) et dans lequel la tête des bouteilles individuelles est respectivement insérée, si c'est le cas, avec des bouteilles individuelles dotées d'une bague de centrage de goulot au niveau de l'extrémité de tête effilée, la bague de centrage de goulot étant maintenue sur les contours (6) et/ou, s'il s'agit de loger des bouteilles à capsules scellées et/ou non scellées, les contours annulaires (6) ou les contours cylindriques creux comprennent dans le plan radial des languettes s'étendant vers l'intérieur fléchies dans une direction axiale de telle sorte qu'elles peuvent soit buter sur le bouchon d'une bouteille scellée ou s'engrener de façon autocentrée avec l'ouverture des bouteilles non scellées.

5. Ensemble selon l'une quelconque des revendications 1 à 4, **caractérisé en ce que** les troisièmes contours de maintien sont formés par des creux (7) positionnés dans le côté inférieur de la surface du plateau, les régions de tête des bouteilles d'un emballage multiple respectif étant positionnées dans ces creux.

6. Ensemble selon l'une quelconque des revendications 1 à 5, **caractérisé en ce que** les quatrièmes contours de maintien sont formés par une bordure ondulée (9) qui entoure la surface placée en bas (8) du plateau (1) et dont la forme ondulée est adaptée aux bouteilles insérées à proximité de la bordure, et/ou par des parties de maintien (10, 11) qui sont agencées dans la région de croisement d'une zone dans laquelle des groupes de quatre bouteilles de préférence sont systématiquement insérés et ont des surfaces de maintien concaves adaptées aux bouteilles.

7. Ensemble selon la revendication 6, **caractérisé en ce que** les parties de maintien (11) qui sont agencées le long de la ligne de séparation entre les emballages multiples adjacents ressortent de la surface de maintien de base (8) jusqu'à un niveau plus élevé que les parties de maintien (10), par exemple du double de leur hauteur, qui sont dirigées de façon spécifique entre les éléments individuels d'un emballage multiple.

8. Ensemble selon l'une quelconque des revendications 1 à 7, **caractérisé en ce qu'**à l'extérieur, le plateau (1) est entouré par une bordure souple (12) sur tout son périmètre ou seulement sur une partie de celui-ci.

9. Ensemble selon la revendication 8, **caractérisé en ce que** la bordure souple (12) est entourée par une autre partie de bordure (13) saillante qui se situe à un niveau plus bas que la bordure souple (12).

10. Ensemble selon l'une quelconque des revendications 1 à 9, **caractérisé en ce qu'**un repère (14, 15) indiquant la position d'utilisation est prévu sur l'extérieur de la partie de bordure (13).

11. Ensemble selon l'une quelconque des revendications 1 à 10, **caractérisé en ce que** :
- les premiers contours de maintien (2, 3, 4, 5, 22, 23) sont formés par une bordure de maintien close sur laquelle les contours extérieurs de l'emballage multiple formés par les récipients ou les bouteilles de l'emballage multiple sont maintenus et par des surfaces de maintien (24) ou des arêtes qui forment la surface portante du côté supérieur du plateau (1, 21) et par des arêtes de maintien (25) ou des bagues qui sont agencés sous un emballage multiple, dans les régions rétrécies situées entre les récipients ou les bouteilles adjacents de l'emballage multiple ; et/ou
- les deuxièmes contours de maintien (6, 26) sont formés par des contours annulaires ou des contours cylindriques creux formés dans la surface portante du côté supérieur du plateau (1, 21) et dans lesquels la tête des récipients individuels ou des bouteilles individuelles est respectivement insérée, et si c'est le cas, avec des bouteilles individuelles présentant une bague de centrage de goulot au niveau de l'extrémité de tête effilée, la bague de centrage de goulot étant maintenue sur les contours de maintien (26) ; et/ou
- les troisièmes contours de maintien (7, 27) sont formés par des creux prévus dans le côté inférieur de la surface du plateau, les régions de tête des récipients ou des bouteilles d'un emballage multiple respectif étant positionnées dans ces creux ; et/ou
- les quatrièmes contours de maintien (9, 10, 11, 29, 30) sont formés par des saillies du plateau (1, 21) de type colonne qui supportent la région de pied d'un récipient individuel ou d'une bouteille individuelle insérés sur au moins deux côtés, et au moyen desquelles les récipients individuels agencés en groupes de, de préférence, deux, trois, quatre ou six récipients individuels ou bouteilles individuelles sont maintenus en groupes dans un état poussé ensemble et par des bagues de maintien sur lesquelles les régions de pied des récipients individuels ou des bouteilles individuelles peuvent être placées vers le bas.

12. Ensemble selon l'une quelconque des revendications précédentes, **caractérisé en ce que** le côté supérieur des arêtes de maintien (25) ou des bagues et/ou des bagues de maintien qui forment les quatrièmes contours de maintien (30) et/ou certaines surfaces latérales des saillies de type colonne qui butent contre la surface latérale du récipient inséré et forment les quatrièmes contours de maintien (29) ont un revêtement en élastomère ou en caoutchouc.

13. Ensemble selon la revendication 12, **caractérisé en ce que** les saillies de type colonne qui forment les quatrièmes contours de maintien (29) ont un revêtement en élastomère ou en caoutchouc prenant la forme d'une lèvre de maintien élastiquement déformable.

14. Ensemble selon l'une quelconque des revendications précédentes, **caractérisé en ce que** les saillies de type colonne qui forment les quatrièmes contours de maintien (29) s'effilent en forme de cône à partir du plan placé en bas du plateau (1, 21) jusqu'à leur extrémité libre.

15. Ensemble selon l'une quelconque des revendications 12 à 14, **caractérisé en ce que** le revêtement en élastomère ou en caoutchouc qui est prévu au niveau de la région d'extrémité libre latérale des saillies de type colonne est intégralement relié, de préférence via un pont de matière, au revêtement des bagues de maintien fabriqué à partir d'un matériau en élastomère ou en caoutchouc.

16. Ensemble selon l'une quelconque des revendications précédentes, **caractérisé en ce que** la bordure complète du plateau (1, 21) est pourvue, sur le côté supérieur et/ou sur le côté inférieur, d'un revêtement élastique améliorant les frottements.

17. Ensemble selon l'une quelconque des revendications précédentes, **caractérisé en ce que** la bordure close du plateau (1, 21) a une formation dentée (31 à 34) sur le côté supérieur et le côté inférieur, les dents des formations dentées s'engrenant les unes dans les autres lorsque les plateaux (1, 21) sont empilés directement les uns au-dessus des autres dans la même direction.

18. Ensemble selon la revendication 17, **caractérisé en ce que** la formation dentée placée le long d'une arête périphérique respective est décalée vers l'intérieur ou vers l'extérieur sur la moitié de la longueur de l'arête périphérique, de sorte que les plateaux (1, 21) vides disposés dans des directions opposées peuvent être empilés sans aucun interstice entre eux, auquel cas les rangées de dents décalées des plateaux (1, 21) inférieur et supérieur sont systématiquement positionnées les unes à côté des autres, ou de sorte que les plateaux (1, 21) vides agencés dans la même direction peuvent être empilés sans aucun interstice entre eux, auquel cas les dents s'engrènent systématiquement dans les interstices de dent.

19. Ensemble selon l'une quelconque des revendications 17 ou 18, **caractérisé en ce que** les dents et/ou les interstices de dent des plateaux (1, 21) d'un système identique ont la même forme et/ou le même agencement, les plateaux (1, 21) de différents systèmes ayant différentes formes et/ou différents agencements, de sorte que les plateaux (1, 21) de différents systèmes ont des endentements non compatibles.

20. Ensemble selon l'une quelconque des revendications précédentes, **caractérisé en ce que** le plateau (1, 21) comprend deux parties formant chacune la moitié d'un plateau (1, 21), les deux parties ayant des parties de jonction insérables et/ou des parties de jonction enfichables qui peuvent être reliées entre elles au niveau du plan de séparation, de sorte que le plateau (1, 21) peut être démantelé en deux pièces de mêmes dimensions ou peut être assemblé de façon à former une seule unité à partir de ces pièces.
